# EUROPEAN PATENT APPLICATION

(11) **EP 2 669 430 A1**
(43) Date of publication of application: **04.12.2013**
(21) Application number: 12169968.0
(22) Date of filing: 30.05.2012
(51) Int. Cl.: D21G 1/00, F16F 15/00, F16F 15/027

(54) **Arrangement for controlling vibrations in a fiber web machine**

(71) Applicant: Metso Paper Inc., 00130 Helsinki (FI)
(72) Inventor: Mannio, Aaron, FI-04430 Järvenpää (FI)
(74) Representative: Berggren Oy Ab

(57) **Abstract**

The invention relates to an arrangement for controlling vibrations in a fiber web machines, which arrangement comprises a machine component the vibrations of which is controlled by a piezo actuator (10) connected to a valve or corresponding means which provides pressure for movement of the machine component. The vibrating machine component is supported in a pressurized area formed by sealing means (15) and that pressure in the pressurized area is formed by fluid means and that pressure magnitude of the pressurized area is controlled by a valve and the motion of the valve is implemented by means of a piezo actuator (10).

## Description

The invention relates to a method and arrangement for controlling vibrations in a fiber web machine. In particular the invention relates to an arrangement according to the preamble of claim 1.

In fiber web machines the fiber web is produced and treated in an assembly formed by a number of apparatuses arranged consecutively in a process line. A typical production and treatment line comprises a head box, a wire section and a press section as well as a subsequent drying section and a reel-up. The production and treatment line can further comprise other devices and sections for finishing the fiber web, for example, a sizer, a calender, a coating section. The production and treatment line also comprises at least one winder for forming customer rolls as well as a roll packaging apparatus. In this description and the following claims by fiber webs are meant for example a paper, board, tissue webs. Each section and device comprises several different components in connection of which vibrations may occur. For example vibrations may occur in a nip, which is formed in between two elements, typically between two rolls but also the nip can be formed with a roll, a belt, a shoe or corresponding element and a counter-element of corresponding or different kind, often at least one of the nip forming elements is a roll. The fiber web is passed through the nip by itself or supported by a belt, a felt, a wire or a corresponding fabric. In the nip the fiber web is pressed by the nip pressure in order to remove water from the web or to effect to the properties of the web. Typical nips of a fiber web production line are press nips in which water is removed, calendar nips in which the web is threated for example to achieve certain surface properties such as gloss, reeling and winding nips in which the nip effect is used for the reeling/winding of the fiber web.

In WO publication 2006040399 is disclosed a method for compensation variation in nip load caused by shape defects of a roll in a calender, which comprises a first rotating roll and a second rotating roll, through the nip formed by which the web is threaded and loading devices for altering the nip loading. In this prior art method a shape profile is defined for the first roll, the angle of rotation of the first roll is measured, and the loading devices are controlled on the basis of the shape profile of the first roll, in order to compensate the nip-loading variation caused by shape error in the shell of the first roll.

An object of the invention is to create a new method and arrangement for controlling vibrations, in particular to control a valve for controlling the vibrations.

A further object of the invention is to provide an arrangement with a piezo actuator for creating sufficient power to damp the vibration of the machine component in a fiber web machine.

A further object of the invention is to provide an arrangement for solving the disadvantage in dampening vibrations due to the short strike length of a piezo actuator.

In order to achieve the above mentioned objects the arrangement according to the invention is mainly characterized by the features of the characterizing clause of claim 1.

According to one aspect of the invention a valve for controlling vibrations of a component of a fiber web machine is controlled by a piezo actuator. The vibrating machine component is supported in a pressurized area limited by sealing means. Pressure in the pressurized area is formed by fluid means and pressure magnitude is controlled by the valve and the motion of the valve is implemented by means of a piezo actuator.

A piezo actuator is an actuator the length of which changes precisely following control voltage given to it. The motion is thus as quick as the changes in voltage. The motion is still relatively small, about some tenths of a millimeter (± 0, 2 mm). The force of the motion is for example 1 -15 kN, advantageously about 5 - 10 kN. Thus the actuator provides for the quick moving of the valve shaft. The force is well sufficient for conquering forces caused by seal frictions, inertial forces and fluid pressure to the shaft.

The arrangement according to the above aspect of the invention in an advantageous example comprises a piezo controlled valve for controlling vibrations of a component of a fiber web machine in connection with hydrostatic bearing where fluid is fed to the bearing via the piezo controlled valve for moving the shaft of the valve by fluid pressure. By changing flow speed vibration is provided to the shaft. If no sealing is limiting the pressure area the, changes in the pressure moving the shaft are not sharp enough when the pressure increases due to the fact that fluid continuously flows past the shaft to the return pipes the quicker the higher the pressure is. This decelerates the increase of pressure. When the pressure is again decreased by choking the valve, it takes some time of the pressure of fluid in the clearance of the shaft to decrease as fluid flows from a relatively small clearance to the return pipes. Due to the above issues, to the component of the machine are formed areas limited by sealing means, the hydraulic pressures conveyed to which provides for controlling the position of the component of the machine as counter forces of external forces. As the pressure area supporting the machine part is closed, the changes in pressure are sharper compared to a leaking pressure area.

According to another aspect of the invention for controlling vibrations, especially for dampening vibration, counter vibrations are provided for example by hydraulic means. In fiber web machine structures and components the frequencies of vibrations are typically rather high thus the hydraulic pressure changes are required to meet these frequencies and thus the valve controlling the pressure must be fast. According to the invention a piezo actuator is used for moving the valve. The piezo actuator is fast but its strike length is rather short. In order to provide a large area of the opening of the pressure controlling valve in spite of the short strike length, the opening movement of the flow openings has been increased by changing the linear movement of the actuator to rotational movement and advantageously using a lever ratio which is formed by the ratio between the valve cylinder and the moment length of the actuator. Thus the movement of the piezo actuator is increased by using a rocker which turns on a sharp point for sensitive movements. At one end of the rocker is the actuator and at the other end spring means for example a set of cup springs. The forces of the actuator and the set of cup springs are 1 -15 kN, advantageously 5 - 10 kN, such that high acceleration is achieved for the valve cylinder.

According to advantageous features the valve comprises a cylinder with grooves that penetrate the wall of the cylinder and a casing in which channels are formed for inlet and outlet of the fluid, for example oil. The casing has at least one groove, advantageously at least two grooves corresponding to one groove of the cylinder by which by turning the cylinder the valve is either in inlet position or outlet position depending on the direction of rotation. Inside the cylinder the pressure is adjusted by either opening the inlet route from the pressure line or the outlet route from the tank line. By the number and length of the grooves area of flow of the valve can be determined.

According to an advantageous features of this aspect of causing pressure vibrations the piezo actuator is used to control the valve by which the needed power of the piezo actuator is less than for example in cases where the actuator causes the pressure vibrations directly for example by means of a piston. The power of the vibration depends thus on pressure, not on the power of the piezo actuator. Due to the structure of the valve the fluid pressure causes a symmetrical load by which the friction is minimized.

According to advantageous features the fluid is liquid or gas or mixture of liquid and gas, advantageously oil.

In the following the invention is explained in detail with reference to the accompanying drawing to which the invention is not to be narrowly limited.

In figure 1 is shown schematically an example of one advantageous arrangement according to the invention.

In figure 2 is shown schematically another example of another advantageous arrangement according to the invention.

In figures 3 - 4 is shown schematically yet another example of another advantageous arrangement according to the invention.

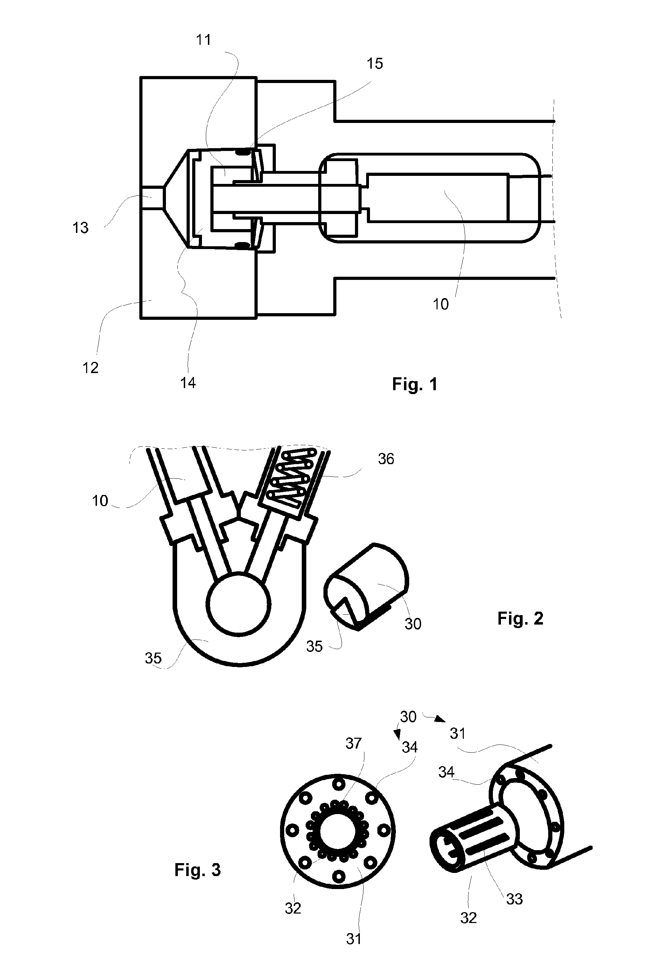

In figure 1 is shown a piezo actuator 10 coupled directly to a piston 11 in the cylinder 12. The chamber 14 of the cylinder 12 is filled with fluid and coupled with a pressure sensor 13. The chamber 14 is sealed by sealing means 15. Pressure changes of about ±20 bars can be provided by means of the piezo actuator 10 by the arrangement of Fig. 1, if pressure changes are in a considerably small, closed space formed by the chamber 14.

In the example of figures 2 - 3 a piezo actuator 10 is used for moving the valve 30. In order to provide a large area of the opening of the pressure controlling valve 30, the opening movement of the flow openings has been increased by providing the actuator 10 with rotational movement and advantageously using a lever ratio which is formed by the ratio between the valve cylinder 32 and the moment length of the actuator 10. Thus the movement of the piezo actuator 10 is increased by using a rocker 35 which turns on a sharp point for sensitive movements. At one end of the rocker 35 is the actuator 10 and at the other end spring means 36 for example a set of cup springs. The valve 30 comprises a cylinder 32 with grooves 33 that penetrate the wall of the cylinder 32 and a casing 31 in which channels 34 are formed for inlet and outlet of the fluid, for example oil. The casing 31 has advantageously two grooves 37 corresponding to one groove 33 of the cylinder 32 by which by turning the cylinder 32 the valve 20 is either in inlet position or outlet position depending on the direction of rotation. Inside the cylinder 32 the pressure is adjusted by either opening the inlet route from the pressure line or the outlet route from the tank line.

To further improve the power supply in order to damp the vibration of a heavy machine component, which require large pressure areas and long seals, a piezo actuator 10 controlled valve for example for a fiber web machine, can advantageously be arranged to provide pressure vibration to a sealed area formed on the shaft. When the valve stem is in the middle position, both the tank and the pressure lines are closed. The piezo 10 deflects the valve to one side or the other, pressure in the sealed area either increases or decreases as the valve discharges pressure either from the pump via line to the pressure area or from the pressure area to the tank via line. When suitable pressure is known for the pressure area, the feed pressure can be set higher such that the pressure difference between the feed pressure and the nominal pressure of the pressure area as well as the pressure area and the tank line are equal and the pressure decrease and increase speeds in the pressure area are equal. As the piezo actuator 10 operates as a controlling component, its energy only has to exceed the friction, mass and pressure forces of the slide valve. Vibration energy is obtained from a hydraulic pump. To equalize pressure on the feed side, a pressure accumulator can been located on the feed side due to flow losses of the lines.

Above the invention has been described with reference to some advantageous examples only by this is not intended to limit the scope as many alterations and modifications are possible within the inventive idea.

## Claims

1. Arrangement for controlling vibrations in a fiber web machines, which arrangement comprises a machine component the vibrations of which is controlled by a piezo actuator (10) connected to a valve or corresponding means which provides pressure for movement of the machine component, **characterized in, that** the vibrating machine component is supported in a pressurized area formed by sealing means (15) and that pressure in the pressurized area is formed by fluid means and that pressure magnitude of the pressurized area is controlled by a valve and the motion of the valve is implemented by means of a piezo actuator (10).

2. Arrangement according to claim 1, **characterized in, that** the arrangement comprises the by the piezo actuator (10) controlled valve for controlling vibrations of a component of a fiber web machine in connection with hydrostatic bearing where fluid is fed to the bearing via the piezo actuator (10) controlled valve for moving the shaft of the valve by fluid pressure, that by changing flow speed vibration is provided to the shaft.

3. Arrangement according to claim 1, **characterized in, that** counter vibrations are provided by hydraulic means the piezo actuator (10) is used for moving the valve and that the movement of the piezo actuator (10) is increased by using a rocker (35).

4. Arrangement according to claim 3, **characterized in, that** the rocker has a sharp turning point for sensitive movements.

5. Arrangement according to claim 3 or 4, **characterized in, that** in the arrangement at one end of the rocker (35) is the piezo actuator (10) and at the other end spring means (36) for example a set of cup springs are provided.

6. Arrangement according to claim 3, **characterized in, that** the valve comprises a cylinder (32) with grooves (33) penetrating the wall of the cylinder (32) and a casing (31) in which channels (34) are formed for inlet and outlet of the fluid, for example oil.

7. Arrangement according to claim 6, **characterized in, that** the casing has at least one groove (37) corresponding to one groove (33) of the cylinder by which by turning the cylinder (32) the valve (20) is either in inlet position or outlet position depending on the direction of rotation.

8. Arrangement according to claim 2, **characterized in, that** the fluid is liquid or gas or mixture of liquid and gas, advantageously oil.
